# EUROPEAN PATENT APPLICATION

(11) **EP 1 149 865 A1**
(43) Date of publication of application: **31.10.2001**
(21) Application number: 01810393.7
(22) Date of filing: 23.04.2001
(51) Int. Cl.: C08K 5/00, C08K 5/3435, C08L 23/02

(54) **Synergistic stabilizer compositions comprising copolymers of ethylene with hindered amine moiety-containing acrylate or methacrylate comonomers**

(30) Priority: 25.04.2000 GB 0009965
(71) Applicant: Clariant Finance (BVI) Limited, Road Town, Tortola (VG)
(72) Inventor: Dongiovanni, Ernesto, 68000 Colmar (FR); Kröhnke, Christoph, 79206 Breisach (DE); Malik, Jan, 68300 St. Louis (FR); Stoll, Klaus, 79589 Binzen (DE); Zäh, Matthias, 86368 Gersthofen (DE)
(74) Representative: D'haemer, Jan Constant

(57) **Abstract**

The instant invention relates to synergistic stabilizer compositions for thermoplastic polymers comprising
a) a random copolymer of ethylene (I) and hindered amine moieties containing acrylates/ methacrylates (II) 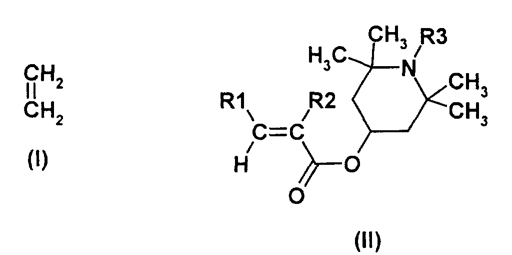 and
b) at least one light stabilizing compound based on sterically hindered amines (HAS) and/or UV absorbers.

Polyethylene based articles which are exposed to permanent extraction and agressive and/or hazardous chemicals show significantly improved lifetime as measured by carbonyl formation or time to brittleness.

## Description

The invention relates to synergistic stabilizer compositions comprising copolymers of ethylene with hindered amine moieties containing acrylate- or methacrylate comonomers and other light stabilizers for polymer articles.

The demand for increasingly versatile plastic materials has promoted their penetration in a variety of application areas where it is required to provide increasing durability of effective stabilization. Antioxidants have to retard or to prevent degrading reactions within the polymer matrix which involves many competing reactions. But decreasing polymer protection due to a loss or decomposition of stabilizers is often observed. Since the early beginnings of the use of antioxidants such as sterically hindered phenols and amines a move from low molecular weight products to higher molecular weight products can be observed. Reason for those changes was to develop stabilizers with higher leaching resistance and reduced tendency of diffusion out of the polymer matrix. In a subsequent step stabilizers have been prepared with varying degrees of success which can be covalently bound to the polymer chain. Nevertheless considerable improvements of the extraction resistance of such bound stabilizer moiety can be reached but the performance is often sacrified.

Developments with modified focus were based and base on physical blends of stabilizers in order to take advantage of their homo- or heterosynergistic efficiency. This could be reached if a blend-composition of two stabilizers - for example two sterically hindered amine stabilizers (HAS) or HAS with UV-absorbers (UVA) - shows a higher contribution as compared to the individual components.

As polymer materials move into new application areas such as food packaging or even medical devices, numerous regulations were set up by the authorities governing these specific applications. Obviously polymer-bound stabilizers should be able to prevent undesired food contamination and to maintain a long service life, high transparency and exceptional resistance to chemical attack. Likewise in multilayer products migration of stabilizers from one layer to another can remove the stabilizer from most oxidation-sensitive domains of the polymer device.

An additional objective for polymer bound stabilizers are uncontrolled changes of polymer surface properties. In some cases this effect can be connected with the loss of cling, sealing or printability features which affects parameters such as peel strength and adhesion to the base material.

Technical requirements for plastic articles used in outdoor applications such as agricultural films and geotextiles are high. Those articles must resist weathering due to sunlight, humid conditions and chemicals. State of the art are Ni-quenchers and benzophenone-based UVA's, HAS and particularly higher molecular weight tertiary HAS systems which offer an efficient approach to UV-stabilization. Future market needs focus on longer lived and thinner articles e.g. films which requires even more powerful, migration-resistant stabilizers.

It has now been found that combinations of a random copolymer of ethylene and hindered amine moieties containing acrylates/methacrylates with light stabilizing components based on sterically hindered amines (HAS) and/or UV-absorbers (UVA) in a variety of different polymer substrates lead to a pronounced synergistic stabilization effect. Such effects have been found in all kinds of polyethylene and ethylene-based copolymers which are used in a broad variety of polymer geometry's (thin films, thick sections, fibers etc.).

Object of the instant invention are synergistic stabilizer compositions for thermoplastic polymers comprising
a) a random copolymer of ethylene (I) and hindered amine moieties containing acrylates/ methacrylates (II) 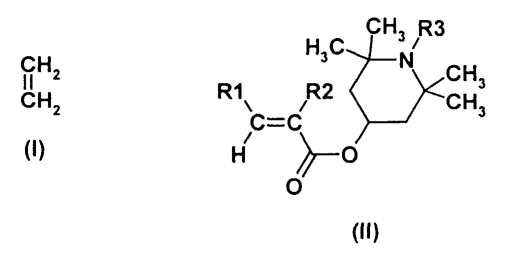 and
b) at least one light stabilizing compound based on sterically hindered amines (HAS) and/or UV absorbers,
wherein
R1 and R2 are each an independent hydrogen atom or a methyl group,
R3 is a hydrogen atom, a C₁-C₄-alkyl or a C₁-C₈-alkoxy group,
the ratio of component (II) to the sum of components (I) and (II) is less than 2 mol-%, and
the weight ratio of component a) to component b) is from 100:1 to 3:1, preferably from 20:1 to 5:1.

Preferably R1, R2 and R3 are hydrogen.

When the light stabilizing compound b) is propanedioic acid,[(4-methoxyphenyl)-methylene]-,bis(1,2,2,6,6-pentamethyl-4-piperidinyl)ester (compound (III)) 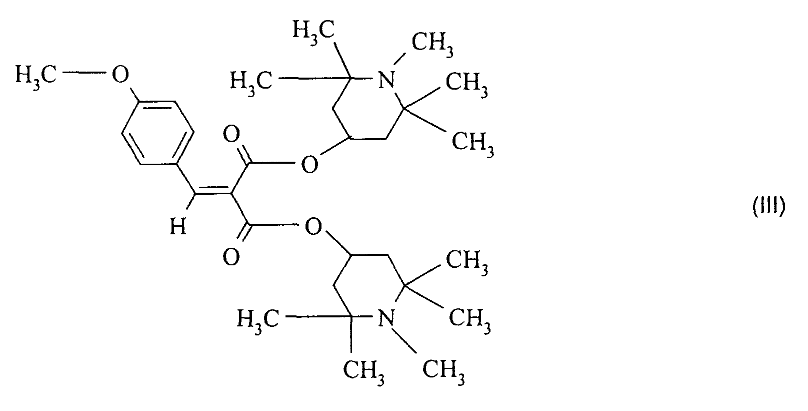 a high synergistic effect is observed.

The product out of components (I) and (II) (component a)) represents a random copolymer with a melt flow ratio ranging from 0.1 to 200 g/10 minutes (definition see EP-A-0 468 418).

The copolymer itself is known from EP-A-0 468 418, US 5,182,349 and US 5,262,233.

Synergistic systems consisting of the here claimed copolymers of ethylene and hindered amine containing moieties of acrylates/ methacrylates with other HAS-based stabilizers and / or UV-absorbers offer clear advantages with regard to sophisticated technical requirements (several years outdoor performance, maximum transparency, no loss of [visible] light transmission, high thermicity, minimum dust accumulation, chemical resistance, anti-fogging properties etc.).

Particularly advantageous is the use of said synergistic compositions for those polymeric, mostly polyethylene-based, articles which are exposed to permanent extraction and aggressive and/or hazardous chemicals.

Significant technical parameters such as carbonyl formation or time to brittleness under accelerated conditions reflecting the lifetime of the corresponding polymer article under ambient conditions can be significantly improved against the state of the art by said compositions.

The magnitude of these effects is particularly surprising in the light of the literature. For example, HAS-systems linked to the matrix polymers result in much poorer weathering performance [J.L.Hahnfeld and D.D.Devore, Polym. Degrad. Stab., 39, 241 (1993)]. This drawback is not obvious since the HAS moiety is still active but just fixed by a covalent bond to the polymer chain.

Even more surprising is the high specific efficiency of the used HAS-grafted copolymers of type I/II despite its relatively low concentration of active HAS-functionality (about 5 wg-%) compared to conventional, oligomeric HAS-compounds such as compound (B) or compound (D) (see examples).

A further object of the instant invention therefore is a method of use of said stabilizer compositions for the stabilization of thermoplastic polymers, especially polyolefins , in concentrations of 0.5 % to 20 %, preferably 1.0 % to 10 % by weight, based on the polymer.

Another object of the instant invention is a process of stabilizing thermoplastic polymers, especially polyolefins, by incorporating 0.5 % to 20%, preferably 1.0 % to 10 % by weight, based on the polymer, of said stabilizer compositions.

Suitable thermoplastic polymers to be stabilized according to the instant invention are for example the following ones:
1. Polymers of monoolefins and diolefins, for example polypropylene, polyisobutylene, polybut-1-ene, poly-4-methylpent-1-ene, polyisoprene or polybutadiene, as well as polymers of cycloolefins, for example of cyclopentene or norbornene; furthermore polyethylene (which optionally can be crosslinked); for example, high density polyethylene (PE-HD), polyethylene of high density and high molar mass (PE-HD HMW), polyethylene of high density and ultrahigh molar mass (PE-HD UHMW), medium density polyethylene (PE-MD), low density polyethylene (PE-LD), linear low density polyethylene (PE-LLD), branched low density polyethylene (PE-BLD).
   Polyolefins, i.e. polymers of monoolefins exemplified in the preceding paragraph, in particular polyethylene and polypropylene, can be prepared by various, and especially by the following, methods:
   a) free-radical polymerization (normally under high pressure and at elevated temperature)
   b) catalytic polymerization using a catalyst that normally contains one or more metals of group IVb, Vb, VIb or VIII of the Periodic Table. These metals usually have one or more ligands, such as oxides, halides, alcoholates, esters, ethers, amines, alkyls, alkenyls and/or aryls that may be either π- or σ-coordinated. These metal complexes may be in the free form or fixed on substrates, for example on activated magnesium chloride, titanium(III) chloride, alumina or silicon oxide. These catalysts may be soluble or insoluble in the polymerization medium. The catalysts can be active as such in the polymerization or further activators may be used, for example metal alkyls, metal hydrides, metal alkyl halides, metal alkyl oxides or metal alkyloxanes, the metals being elements of groups la, IIa and/or IIIa of the Periodic Table. The activators may be modified, for example, with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polyethylene with polyisobutylene, polypropylene with polyethylene (for example PP/PE-HD/PE-LD) and mixtures of different types of polyethylene (for example PE-LD/PE-HD) with one another.
3. Copolymers of monoolefins and diolefins with each other or with other vinyl monomers, for example ethylene-propylene copolymers, linear low density polyethylene (PE-LLD) and mixtures thereof with low density polyethylene (PE-LD), propylene-but-1-ene copolymers, propylene-isobutylene copolymers, ethylene-but-1-ene copolymers, ethylene-hexene copolymers, ethylene-methylpentene copolymers, ethylene-heptene copolymers, ethylene-octene copolymers, propylene-butadiene copolymers, isobutylene-isoprene copolymers, ethylene-alkyl acrylate copolymers, ethylene-alkyl methacrylate copolymers, ethylene-vinyl acetate copolymers and their copolymers with carbon monoxide or ethylene-acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned under 1), for example polypropylene-ethylene-propylene copolymers, PE-LD-ethylene-vinyl acetate copolymers, PE-LD-ethylene-acrylic acid copolymers, PE-LLD-ethylene-vinyl acetate copolymers, PE-LLD-ethylene-acrylic acid copolymers and alternating or random polyalkylene-carbon monoxide copolymers and mixtures thereof with other polymers, for example polyamides.
4. Hydrocarbon resins (for example C₅-C₉) including hydrogenated modifications thereof (e.g. tackifier resins) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene-butadiene, styrene-acrylonitrile, styrene-alkyl methacrylate, styrene-butadiene-alkyl acrylate, styrene-butadiene-alkyl methacrylate, styrenemaleic anhydride, styrene-acrylonitrile-methacrylate; mixtures of high impact strength of styrene copolymers and another polymer, for example a polyacrylate, a diene polymer or an ethylene-propylene-diene terpolymer; and block copolymers of styrene, such as styrene-butadiene-styrene, styrene-isoprene-styrene, styrene-ethylene/butylene-styrene or styrene-ethylene/propylene-styrene.
7. Graft copolymers of styrene or α-methylstyrene, for example styrene on polybutadiene, styrene on polybutadiene-styrene or polybutadiene-acrylonitrile copolymers, styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or alkyl methacrylates on polybutadiene, styrene and acrylonitrile on ethylene-propylene-diene terpolymers, styrene and acrylonitrile on polyalkyl acrylates or polyalkyl methacrylates, styrene and acrylonitrile on acrylate-butadiene copolymers, as well as mixtures thereof with the copolymers mentioned under 6), for example the copolymer mixtures known as ABS, MBS, ASA or AES polymers.
8. Halogen-containing polymers, such as polychloroprene, chlorinated rubber, chlorinated and brominated copolymer of isobutylene-isoprene (halobutyl ruuber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride; as well as copolymers thereof such as vinyl chloride-vinylidene chloride, vinyl chloride-vinyl acetate or vinylidene chloride-vinyl acetate.
9. Polymers derived from α,β-unsaturated acids and derivatives thereof, such as polyacrylates and polymethacrylates, polyacrylonitriles, polyacrylamides and polymethyl methacrylates impact-modified with butyl acrylate.
10. Copolymers of the monomers mentioned under 9) with each other or with other unsaturated monomers, for example acrylonitrile-butadiene copolymers, acrylonitrile-alkyl acrylate copolymers, acrylonitrile-alkoxyalkyl acrylate copolymers, acrylonitrile-vinyl halide copolymers or acrylonitrile-alkyl methacrvlate-butadiene terpolymers.
11. Polymers derived from unsaturated alcohols and amines or the acyl derivatives or acetals thereof, such as polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in section 1.
12. Homopolymers and copolymers of cyclic ethers, such as polyalkylene glycols, polyethylene oxide, polypropylene oxide or copolymers thereof with bisglycidyl ethers.
13. Polyacetals such as polyoxymethylene and those polyoxymethylenes which contain comonomers, for example ethylene oxide; polyacetals modified with thermoplastic polyurethanes, acrylates or MBS.
14. Polyphenylene oxides and sulfides, and mixtures thereof with styrene polymers or polyamides.
15. Polyurethanes derived from hydroxyl-terminated polyethers, polyesters and polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, such as polyamide 4, 6, 6/6, 6/10, 6/9, 6/12, 4/6, 12/12, 11 and 12, aromatic polyamides starting from m-xylene, diamine and adipic acid; polyamides prepared from hexamethylenediamine and isophthalic and/or terephthalic acid and with or without an elastomer as modifier, for example poly-2,4,4-trimethylhexamethylene terephthalamide or poly-m-phenylene isophthalamide. Block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol. As well as polyamides or copolyamides modified with EPDM or ABS; and polyamides condensed during processing (RIM polyamide systems).
17. Polyureas, polyimides, polyamide-imides, polyether imides, polyester amides, polyhydantoins and polybenzimidazoles.
18. Polyesters derived from dicarboxylic acids and dialcohols and/or from hydroxycarboxylic acids or the corresponding lactones, such as polyethylene terephthalate, polybutylene terephthalate, poly-1,4-dimethylolcyclohexane terephthalate, polyhydroxybenzoates, as well as block polyether-esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, urea or melamine on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example from epoxy acrylates, urethane acrylates or polyester acrylates.
25. Alkyd resins, polyester resins and acrylic resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, examples being products of bisphenol-A-diglycidyl ethers, bisphenol-F-diglycidyl ethers, which are crosslinked by means of customary hardeners, such as anhydrides or amines, for example, with or without accelerators.
27. Natural polymers such as cellulose, natural rubber, gelatin and derivatives thereof which have been chemically modified in a polymer-homologous manner, for example cellulose acetates, cellulose propionates and cellulose butyrates, or the cellulose ethers such as methyl cellulose; as well as rosins and derivatives.
28. Mixtures (polyblends) of the aforementioned polymers, for example PP/EPDM, polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/MBS, PPO/HIPS, PPO/PA 6.6 and copolymers, PA/PE-HD, PA/PP, PA/PPO, PBT/ABS or PBT/PET/PC.
29. Natural and synthetic organic substances which constitute pure monomeric compounds or mixtures thereof, examples being mineral oils, animal or vegetable fats, oils and waxes, or oils, waxes and fats based on synthetic esters (e.g. phthalates, adipates, phosphates or trimellitates), and also blends of synthetic esters with mineral oils in any desired proportion by weight, as are employed, for example, as spin finishes, and aqueous emulsions thereof.
30. Aqueous emulsions of natural or synthetic rubbers, such as natural rubber latex or latices of carboxylated styrene-butadiene copolymers.

The stabilizer compositions of the instant invention or the thermoplastic polymers to be stabilized may if desired also comprise further additives, examples being antioxidants, light stabilizers, metal deactivators, antistatic agents, flame retardants, lubricants, nucleating agents, acid scavengers (basic costabilizers), pigments and fillers. Examples of suitable additives which can additionally be employed in combination are compounds as set out below:

### 1. Antioxidants

1.1. Alkylated monophenols, for example 2,6-di-tert-butyl-4-methylphenol, 2-butyl-4,6-dimethylphenol, 2,6-di-tert-butyl-4-ethylphenol, 26-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, linear or sidechain-branched nonylphenols, such as 2,6-di-nonyl-4-methylphenol, 2,4-dimethyl-6-(1-methylundec-1'-yl)-phenol, 2,4-dimethyl-6-(1'-methylheptadec-1'-yl)-phenol, 2,4-dimethyl-6-(1'-methyltridec-1'-yl)phenol and mixtures thereof.
1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-didodecylthiomethyl-4-nonylphenol.
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
1.4. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl) disulfide.
1.5 Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, bis(3-tert-butyl-4-hydroxy-5-methylphenyl)-dicyclopentadiene, bis[2-(3'-tert-butyl-2'-hydroxy-5'-methylbenzyl)-6-tert-butyl-4-methylphenyl] terephthalate, 1,1-bis(3,5-dimethyl-2-hydroxyphenyl)butane, 2,2-bis(3,5-di-tert-butyl-4-hydroxyphenyl)propane, 2,2-bis(5-tert-butyl-4-hydroxy-2-methylphenyl)-4-n-dodecylmercaptobutane, 1,1,5,5-tetra-(5-tert-butyl-4-hydroxy-2-methylphenyl)pentane, ethylene glycol bis[3,3-bis(3'-tert-butyl-4'-hydroxyphenyl)butyrate].
1.6. O-, N- and S-benzyl compounds, for example 3,5,3',5'-tetra-tert-butyl-4,4'-dihydroxydibenzyl ether, octadecyl 4-hydroxy-3,5-dimethylbenzylmercaptoacetate, tris(3,5-di-tert-butyl-4-hydroxybenzyl)amine, bis(4-tert-butyl-3-hydroxy-2,6-dimethylbenzyl) dithioterephthalate, bis(3,5-di-tert-butyl-4-hydroxybenzyl) sulfide, isooctyl 3,5-di-tert-butyl-4-hydroxybenzylmercaptoacetate, tridecyl 4-hydroxy-3,5-di-tert-butylbenzylmercaptoacetate.
1.7. Hydroxybenzylated malonates, for example dioctadecyl 2,2-bis(3,5-di-tert-butyl-2-hydroxybenzyl)malonate, dioctadecyl 2-(3-tert-butyl-4-hydroxy-5-methylbenzyl)malonate, didodecyl mercaptoethyl-22-bis(3,5-di-tert-butyl-4-hydroxybenzyl)malonate, di-[4-(1,1,3,3-tetramethylbutyl)phenyl] 2,2-bis(3,5-di-tert-butyl-4-hydroxybenzyl)malonate.
1.8. Benzylphosphonates, for example dimethyl 2,5-di-tert-butyl-4-hydroxybenzylphosphonate, diethyl 3,5-di-tert-butyl-4-hydroxybenzylphosphonate, dioctadecyl 3,5-di-tert-butyl-4-hydroxybenzylphosphonate, dioctadecyl 5-tert-butyl-4-hydroxy-3-methylbenzylphosphonate, the Ca salt of the monoethyl ester of 3,5-di-tert-butyl-4-hydroxybenzylphosphonic acid.
1.9. Acylaminophenols, for example 4-hydroxylauranilide, 4-hydroxystearanilide, octyl N-(3,5-di-tert-butyl-4-hydroxyphenyl)carbamate.
1.10. Esters of β-(35-di-tert-butyl-4-hydroxyphenyl)propionic acid with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.11. Esters of β-(5-tert-butyl-4-hydroxy-3-methylphenyl)propionic acid with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.12. Esters of β-(3,5-dicyclohexyl-4-hydroxyphenyl)propionic acid with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.13. Esters of 3,5-di-tert-butyl-4-hydroxyphenylacetic acid with mono- or polyhydric alcohols, e.g. with methanol, ethanol, n-octanol, isooctanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxalamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.14. Esters of 3,3-bis(3'tert-butyl-4'-hydroxyphenyl)butyric acid with mono- or polyhydric alcohols, e.g. with methanol, ethanol, n-octanol, isooctanol, octadecanol, 1,6-hexanediol, 1,9-nonanediol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxalamide, 3-thia-undecanol, 3-thiapentadecanol, trimethylhexanediol, trimethylolpropane, 4-hydroxymethyl-1-phospha-2,6,7-trioxabicyclo[2.2.2]octane.
1.15. Amides of β-(3,5-di-tert-butyl-4-hydroxyphenyl)propionic acid, e.g. N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine.
1.16. Tocopherol, such as α-tocopherol, β-tocopherol, γ-tocopherol, δ-tocopherol and mixtures thereof (vitamin E).
1.16. Ascorbic acid (vitamin C).
1.18. Amine antioxidants, for example N,N'-diisopropyl-p-phenylenediamine, N,N'di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-di(naphthyl-2-)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(-toluenesulfonamido)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, e.g. p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, di(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-di-[(2-methylphenyl)amino]ethane, 1,2-di-(phenylamino)propane, (o-tolyl)biguanide, di[4-(1',3'-dimethylbutyl)-phenyl]amine, tert-octylated N-phenyl-1-naphthylamine, mixture of mono- and dialkylated tert-butyl/tert-octyldiphenylamines, mixture of mono- and dialkylated nonyldiphenylamines, mixture of mono- and dialkylated dodecyldiphenylamines, mixture of mono- and dialkylated isopropyl/isohexyl-diphenylamines, mixture of mono- and dialkylated tert-butyldiphenylamines, 2,3-dihydro-3,3-dimethyl-4H-1,4-benzothiazine, phenothiazine, mixture of mono- and dialkylated tert-butyl/tert-octyl-phenothiazines, mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperidin-4-yl)hexamethylenediamine, bis(2,2,6,6-tetramethylpiperidin-4-yl) sebacate, 2,2,6,6-tetramethylpiperidin-4-one, 2,2,6,6-tetramethylpiperidin-4-ol.

### 2. UV absorbers and light stabilizers

2.1 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-[2'-hydroxy-5'-(1,1,3,3-tetramethylbutyl)phenyl]benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octoxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, a mixture of 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazol-2-ylphenol]; the transesterification product of 2-[3'-tert.-butyl-5'-(2-methoxycarbonylethyl)-2'-hydroxyphenyl]benzotriazole with polyethylene glycol 300; [R-CH₂CH₂-COO(CH₂)₃]₂ where R = 3'-tert-butyl-4'-hydroxy-5'-2H-benzotriazol-2-ylphenyl.
2.2 2-Hydroxybenzophenones, for example the 4-hydroxy, 4-methoxy, 4-octoxy, 4-decyloxy, 4-dodecyloxy, 4-benzyloxy, 4,2',4'-trihydroxy and 2'-hydroxy-4,4'-dimethoxy derivative.
2.3 Esters of substituted or unsubstituted benzoic acids, for example 4-tert-butyl-phenyl salicylate, phenyl salicylate, octylphenyl salicylate, dibenzoylresorcinol, bis(4-tert-butylbenzoyl)resorcinol, benzoylresorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
2.4 Acrylates, for example ethyl α-cyano-β,β-diphenylacrylate or isooctyl α-cyano-β,β-diphenylacrylate, methyl α-carbomethoxycinnamate, methyl α-cyano-β-methyl-p-methoxycinnamate or butyl α-cyano-β-methyl-p-methoxycinnamate, methyl α-carbomethoxy-p-methoxycinnamate and N-(β-carbomethoxy-β-cyanovinyl)-2-methylindoline.
2.5 Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of monoalkyl esters, such as of the methyl or ethyl ester, of 4-hydroxy-3,5-di-tert-butylbenzylphosphonic acid, nickel complexes of ketoximes, e.g. of 2-hydroxy-4-methylphenyl undecyl ketoxime, nickel complexes of 1-phenyl-4-lauroyl-5-hydroxypyrazole, with or without additional ligands.
2.6 Sterically hindered amines, for example bis(2,2,6,6-tetramethylpiperidin-4-yl) sebacate, bis(2,2,6,6-tetramethylpiperidin-4-yl) glutarate, bis(2,2,6,6-tetramethylpiperidin-4-yl) succinate, bis(1,2,2,6,6-pentamethylpiperidin-4-yl) sebacate, bis(1,2,2,6,6-pentamethylpiperidin-4-yl) glutarate, 2,2,6,6-tetramethylpiperidyl behenate, 1,2,2,6,6-pentamethylpiperidyl behenate, the condensate of 1-hydroxyethyl-2,2,6,6-tetramethyl-4-hydroxypiperidine and succinic acid, the condensate of N,N'-bis-(2,2,6,6-tetramethyl-4-piperidyl)hexamethylendiamine and 4-tert-octylamino-2,6-dichloro-1,3,5-s-triazine, tris-(2,2,6,6-tetramethyl-4-piperidyl) nitrilotriacetate, tetrakis(2,2,6,6-tetramethyl-4-piperidyl) 1,2,3,4-butantetraoate, 1,1'-(1,2-ethanediyl)-bis-(3,3,5,5-tetramethylpiperazinone), 4-benzoyl-2,2,6,6-tetramethylpiperidine, 4-stearyloxy-2,2,6,6-tetramethylpiperidine, 4-stearoyloxy-2,2,6,6-tetramethylpiperidine, 4-stearyloxy-1,2,2,6,6-pentamethylpiperidine, 4-stearoyloxy-1,2,2,6,6-pentamethylpiperidine, bis(1,2,2,6,6-pentamethylpiperidyl) 2-n-butyl-2-(2-hydroxy-3,5-di-tert-butylbenzyl)malonate, bis(1,2,2,6,6-pentamethylpiperidyl) 2-n-butyl-2-(4-hydroxy-3,5-di-tert-butylbenzyl)malonate, 3-n-octyl-7,7,9,9-tetramethyl-1,3,8-triazaspiro[4.5] decane-2,4-dione, bis(1-octyloxy-2,2,6,6-tetramethylpiperidyl) sebacate, bis-(1-octyloxy-2,2,6,6-tetramethylpiperidyl) succinate, the condensate of N,N'-bis(2,2,6,6-tetramethyl-4-piperidyl)hexamethylenediamine and 4-morpholino-2,6-dichloro-1,3,5-triazine, the condensate of N,N'-bis(2,2,6,6-tetramethyl-4-piperidyl)hexamethylenediamine and 4-cyclohexylamino-2,6-dichloro-1,3,5-triazine, the condensate of 2-chloro-4,6-di-(4-n-butylamino-2,2,6,6-tetramethylpiperidyl)-1,3,5-triazine and 1,2-bis-(3-aminopropylamino)ethane, the condensate of 2-chloro-4,6-di-(4-methoxypropylamino-2,2,6,6-tetramethylpiperidyl)-1,3,5-triazine and 1,2-bis-(3-aminopropylamino)ethane, the condensate of 2-chloro-4,6-di-(4-methoxypropylamino-1,2,2,6,6-pentamethylpiperidyl)-1,3,5-triazine and 1,2-bis-(3-aminopropylamino)ethane, the condensate of 2-chloro-4,6-di-(4-n-butylamino-1,2,2,6,6-pentamethylpiperidyl)-1,3,5-triazine and 1,2-bis-(3-aminopropylamino)-ethane, reaction products of 2-chloro-4,6-di-(4-n-butylamino-2,2,6,6-tetramethylpiperidyl)-1,3,5-triazine with mono- or polyfunctional amines, where between one and all the active hydrogen atoms on the amine are replaced, such as with ethylenediamine, diethylenetriamine, triethylenetetramine, hexamethylenediamine, 1,2-bis-(3-aminopropylamino)ethane, reaction products of 2-chloro-4,6-di-(4-n-butylamino-1,2,2,6,6-pentamethylpiperidyl)-1,3,5-triazine with mono- or polyfunctional amines, where between one and all the active hydrogen atoms on the amine are replaced, such as with ethylenediamine, diethylenetriamine, triethylenetetramin, hexamethylenediamine, 1,2-bis(3-aminopropylamino)ethane, reaction products of 2-chloro-4,6-di-(4-n-butylamino-2,2,6,6-tetramethylpiperidyl)-1,3,5-triazine and 4-tert-octylamino-2,6-dichloro-1,3,5-s-triazine with mono- or polyfunctional amines, where between one and all the active hydrogen atoms on the amine are replaced, such as with ethylenediamine, diethylenetriamine, triethylenetetramine, hexamethylenediamine, 1,2-bis(3-aminopropylamino)ethane, reaction products of 2-chloro-4,6-di-(4-n-butylamino-1,2,2,6,6-pentamethylpiperidyl)-1,3,5-triazine and 4-tert-octylamino-2,6-dichloro-1,3,5-s-triazine with mono- or polyfunctional amines, where between one and all the active hydrogen atoms on the amine are replaced, such as with ethylenediamine, diethylenetriamine, triethylenetetramine, hexamethylenediamine, 1,2-bis-(3-aminopropyl-amino)ethane, reaction products of 2-chloro-4,6-di-(4-n-butylamino-2,2,6,6-tetramethylpiperidyl)-1,3,5-triazine and 4-(4-n-butylamino-2,2,6,6-tetramethylpiperidyl)-2,6-dichloro-1,3,5-s-triazine with mono- or polyfunctional amines, where between one and all the active hydrogen atoms on the amine are replaced, such as with ethylenediamine, diethylenetriamine, triethylenetetramine, hexamethylenediamine, 1,2-bis-(3-aminopropylamino)ethane, reaction products of 2-chloro-4,6-di-(4-n-butylamino-1,2,26,6-pentamethylpiperidyl)-1,3,5-triazine and 4-(4-n-butylamino-2,2,6,6-tetramethylpiperidyl)-2,6-dichloro-1,3,5-s-triazine with mono- or polyfunctional amines, where between one and all the active hydrogen atoms on the amine are replaced, such as with ethylenediamine, diethylenetriamine, triethylenetetramine, hexamethylenediamine, 1,2-bis-(3-aminopropylamino)ethane, the condensate of 1,2-bis(3-aminopropylamino)ethane and 2,4,6-trichloro-1,3,5-triazine and also 4-butylamino-2,2,6,6-tetramethylpiperidine, N-(2,2,6,6-tetramethyl-4-piperidyl)-n-dodecylsuccinimide, N-(1,2,2,6,6-pentamethyl-4-piperidyl)-n-dodecylsuccinimide, 8-acetyl-3-dodecyl-7,7,9,9-tetramethyl-1,3,8-triazaspiro[4.5]decane-2,4-dione, oligomerized 2,2,4,4-tetramethyl-20-(oxiranylmethyl)-7-oxa-3,20-diazadispiro[5.1.11.2]heneicosan-21-one, oligomerized 1 ,2,2,4,4-pentamethyl-20-(oxiranylmethyl)-7-oxa-3,20-diazadispiro[5.1.11.2]heneicosan-21-one, oligomerized 1-acetyl-2,2,4,4-tetramethyl-20-(oxiranylmethyl)-7-oxa-3,20-diazadispiro[5.1.11.2]heneicosan-21-one, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, 2,2,4,4-tetramethyl-7-oxa-3,20-diazadispiro-[5.1.11.2]heneicosan-21-one, 2,2,4,4-tetramethyl-7-oxa-21-oxo-3,20-diazadispiro-[5.1.11.2]heneicosane-3-propanoic acid dodecyl ester, 2,2,4,4-tetramethyl-7-oxa-21-oxo-3,20-diazadispiro-[5.1.11.2]heneicosane-3-propanoic acid tetradecyl ester, 2,2,3,4,4-pentamethyl-7-oxa-3,20-diazadispiro-[5.1.11.2]heneicosan-21-one, 2,2,3,4,4-pentamethyl-7-oxa-21-oxo-3,20-diazadispiro-[5.1.11.2]heneicosane-3-propanoic acid dodecyl ester, 2,2,3,4,4-pentamethyl-7-oxa-21-oxo-3,20-diazadispiro-[5.1.11.2]-heneicosane-3-propanoic acid tetradecyl ester, 3-acetyl-2,2,4,4-tetramethyl-7-oxa-3,20-diazadispiro-[5.1.11.2]heneicosane-21-one, 3-acetyl-2,2,4,4-tetramethyl-7-oxa-21-oxo-3,20-diaza-dispiro-[5.1.11.2]heneicosane-3-propanoic acid dodecyl ester, 3-acetyl-2,2,4,4-tetramethyl-7-oxa-21-oxo-3,20-diazadispiro-[5.1.11.2]heneicosane-3-propanoic acid tetradecyl ester, 1,1',3,3',5,5'-hexahydro-2,2',4,4',6,6'-hexaaza-2,2',6,6'-bismethano-7,8-dioxo-4,4'-bis(1,2,2,6,6-pentamethyl-4-piperidyl)biphenyl, poly-N,N'-bis-(2,2,6,6-tetramethyl-4-piperidyl)-1,8-diazadecylene, adduct of 2,2,6,6-tetramethyl-4-allyloxypiperidine and polymethylhydridosiloxane (molar mass up to 4000), adduct of 1,2,2,6,6-pentamethyl-4-allyloxypiperidine and polymethylhydridosiloxane (molar mass up to 4000), N,N'-diformyl-N,N'-bis(2,2,6,6-tetramethyl-4-piperidinyl)-hexamethylenediamine, N,N'-diformyl-N,N'-bis(1,2,2,6,6-pentamethyl-4-piperidinyl)hexamethylenediamine, 5,11-bis-(2,2,6,6-tetramethyl-4-piperidinyl)-3,5,7,9,11,13-hexaazatetra-cyclo[7.4.0.0^{2,7}.1^{3,13}]tetradecane-8,14-dione, 5,11-bis(1,2,2,6,6-pentamethyl-4-piperidinyl)-3,5,7,9,11,13-hexaazatetra-cyclo[7.4.0.0^{2,7}.1^{3,13}]tetradecane-8,14-dione, [(4-methoxyphenyl)methylene]-propanedioic acid bis(2,2,6,6-tetramethyl-4-piperidinyl) ester, [(4-methoxyphenyl)-methylene]propanedioic acid bis-(1,2,2,6,6-pentamethyl-4-piperidinyl) ester, 2,4,6-tris(N-cyclohexyl-N-[2-(3,3,4,5,5-pentamethylpiperazinon-1-yl)ethyl]amino)-1,3,5-triazine, copolymer of styrene with methylstyrene and maleic anhydride reacted with 4-amino-2,2,6,6-tetramethylpiperidine and octadecylamine, copolymer of styrene with α-methylstyrene and maleic anhydride reacted with 4-amino-1,2,2,6,6-pentamethylpiperidine and octadecylamine, polycarbonate with 2,2'-[(2,2,6,6-tetramethyl-4-piperidinyl)imino]bis[ethanol] as diol component, polycarbonate comprising 2,2'-(1,2,2,6,6-pentamethyl-4-piperidinyl)imino]bis[ethanol] as diol component, copolymer of maleic anhydride and an α-olefin up to C₃₀ reacted with 4-amino-2,2,6,6-tetramethylpiperidine, copolymer of maleic anhydride and an α-olefin up to C₃₀ reacted with 1-acetyl-4-amino-2,2,6,6-tetramethylpiperidine, copolymer of maleic anhydride and an α-olefin up to C₃₀ reacted with 4-amino-1,2,2,6,6-pentamethylpiperidine, and also the N-alkyl- and N-aryl-oxy derivatives of the abovementioned compounds with free NH groups on the piperidine, especially α-methylbenzyloxy and alkyloxy from C₁ to C₁₈.
2.7 Oxalamides, for example 4,4'-dioctyloxyoxanilide, 2,2'-diethoxyanilide, 2,2'-dioctyloxy-5,5'-di-tert-butyloxanilide, 2,2'-didodecyloxy-5,5'-di-tert-butyloxanilide, 2-ethoxy-2'-ethyloxanilide, N,N'-bis(3-dimethylaminopropyl)-oxalamide, 2-ethoxy-5-tert-butyl-2'-ethyloxanilide and its mixture with 2-ethoxy-2'-ethyl-5,4'-di-tert-butyloxanilide and mixtures of o- and p-methoxy-disubstituted and of o- and p-ethoxy-disubstituted oxanilides.
2.8 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4',6-bis(2',4-dimethylphenyl)-1,3,5-triazine, 2-(2,4-dihydroxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropyloxy)phenyl]-4,6-bis(2,4-dimethylphenyl)-1,3,5-triazine, 2-[2-hydroxy-4-(2-hydroxy-3-octyloxypropyloxy)phenyl]-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[4-dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-46-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine.
3. Metal deactivators, for example, N,N'-diphenyloxalamide, N-salicylal-N'-salicyloylhydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl) pentaerythritol diphosphite, bisisodecyloxy pentaerythritol diphosphite, bis(2,4-di-tert-butyl-6-methylphenyl) pentaerythritol diphosphite, bis(2,4,6-tri-tert-butylphenyl) pentaerythritol diphosphite, tristearyl sorbitol triphosphite, tetrakis(2,4-di-tert-butylphenyl) 4,4'-biphenylenediphosphonite, 6-isooctyloxy-2,4,8,10-tetra-tert-butyl-12H-dibenzo[d,g]-1,3,2-dioxaphosphocin, 6-fluoro-2,4,8,10-tetra-tert-butyl-12-methyl-dibenzo[d,g]-1,3,2-dioxaphosphocin, bis(2,4-di-tert-butyl-6-methylphenyl) methyl phosphite, bis(2,4-di-tert-butyl-6-methylphenyl) ethyl phosphite, tris(2-tert-butyl-4-thio(2'-methyl-4'-hydroxy-5'-tert-butyl)phenyl-5-methyl) phenyl phosphite, 2,2',2"-nitrilo[triethyl tris(3,3',5,5'-tetra-tert-butyl-1,1'-biphenyl-2,2'-diyl) phosphite], bis[2-methyl-4,6-bis(1,1-dimethylethyl)phenol]phosphorous acid ethyl ester.
5. Hydroxylamines, examples being N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamines prepared from hydrogenated tallow fatty amine.
6. Nitrones, examples being N-benzyl alpha-phenyl nitrone, N-ethyl alpha-methyl nitrone, N-octyl alpha-heptyl nitrone, N-lauryl alpha-undecyl nitrone, N-tetradecyl alpha-tridecyl nitrone, N-hexadecyl alpha-pentadecyl nitrone, N-octadecyl alpha-heptadecyl nitrone, N-hexadecyl alpha-heptadecyl nitrone, N-octadecyl alpha-pentadecyl nitrone, N-heptadecyl alpha-heptadecyl nitrone, N-octadecyl alpha-hexadecyl nitrone, nitrones derived from N,N-dialkylhydroxylamines prepared from hydrogenated tallow fatty amines.
7. Zeolites and hydrotalcites, such as ® DHT 4A. Hydrotalcites of this kind can be described by the formula

   [(M²⁺)₁₋ₓ (M³⁺)ₓ (OH)₂ (Aⁿ⁻)_{x/n} yH₂O],

   where
   - (M²⁺): is Mg, Ca, Sr, Ba, Zn, Pb, Sn, Ni
   - (M³⁺): is Al, B, Bi
   - Aⁿ: is an anion of valence n
   - n: is an integer from 1 - 4
   - x: is a value between 0 and 0.5
   - y: is a value between 0 and 2
   A is OH⁻, Cl⁻, Br⁻, I⁻, ClO₄-, CH₃COO⁻, C₆H₅COO⁻, CO₃²⁻, SO₄²⁻, (OOC-COO)²⁻, (CHOHCOO)₂²⁻, (CHOH)₄CH₂OHCOO⁻, C₂H₄(COO)₂²⁻, (CH₂COO)₂²⁻, CH₃CHOHCOO⁻, SiO₃²⁻, SiO₄⁴⁻, Fe(CN)₆³⁻, Fe(CN)₆⁴⁻, BO₃³⁻, PO₃³⁻, HPO₄²⁻.
   Preference is given to employing hydrotalcites in which (M²⁺) is (Ca²⁺), (Mg²⁺) or a mixture of (Mg²⁺) and (Zn²⁺); (Aⁿ⁻) is CO₃²⁻, BO₃³⁻, PO₃³⁻; x has a value from 0 to 0.5 and y has a value from 0 to 2. It is also possible to employ hydrotalcites that can be described with the formula

   [(M²⁺)ₓ (Al³⁺)₂ (OH)_{2x+6nz} (Aⁿ⁻)₂ yH₂O].

   Here, (M²⁺) is Mg²⁺, Zn²⁺, but more preferably Mg²⁺. (Aⁿ⁻) is an anion, in particular from the group consisting of CO₃²⁻, (OOC-COO)²⁻, OH⁻ and S²⁻, where n describes the valency of the ion. y is a positive number, more preferably between 0 and 5, especially between 0.5 and 5. x and z have positive values, which in the case of x are preferably between 2 and 6 and in the case of z should be less than 2. The hydrotalcites of the following formulae are to be regarded with particular preference:

   Al₂O₃ x 6MgO x CO₂ x 12H₂O,

   Mg_{4.5}Al₂(OH)₁₃ x CO₃ x 3.5H₂O,

   4MgO x Al₂O₃ x CO₂ x 9H₂O,

   4MgO x Al₂O₃ x CO₂ x 6H₂O,

   ZnO x 3MgO x Al₂O₃ x CO₂ x 8-9H₂O,

   ZnO x 3MgO x Al₂O₃ x CO₂ x 5-6H₂O,

   Mg_{4.5}Al₂(OH)₁₃ x CO₃.

   Hydrotalcites are employed in the polymer preferably in a concentration of from 0.01 to 5 % by weight, in particular from 0.2 to 3 % by weight, based on the overall polymer formulation.
8. Thiosynergists, examples being dilauryl thiodipropionate and distearyl thiodipropionate.
9. Peroxide scavengers, examples being esters of β-thiodipropionic acid, for example the lauryl, stearyl, myristyl or tridecyl ester, mecaptobenzimidazole, the zinc salt of 2-mercaptobenzimidazole, zinc alkyldithiocarbamates, zinc dibutyldithiocarbamate, dioctadecyl monosulfide, dioctadecyl disulfide, pentaerythritol tetrakis(β-dodecylmercapto)propionate.
10. Polyamide stabilizers, examples being copper salts in combination with iodides and/or phosphorus compounds and salts of divalent manganese.
11. Basic costabilizers, examples being melamin, polyvinylpyrrolidone, dicyandiamide, triallyl cyanurate, urea derivatives, hydrazine derivatives, amines, polyamines, polyurethanes, alkali metal and alkaline earth metal salts of higher fatty acids, for example Ca stearate, Zn stearate, Mg behenate, Mg stearate, Na ricinoleate, K palmitate, antimony pyrocatecholate or tin pyrocatecholate, alkali metal and alkaline earth metal salts and also the zinc salt or the aluminum salt of lactic acid.
12. Nucleating agents, such as inorganic substances, examples being talc, metal oxides, such as titanium oxide or magnesium oxide, phosphates, carbonates or sulfates of, preferably, alkaline earth metals, organic compounds, such as mono- or polycarboxylic acids and also their salts, examples being 4-tert-butylbenzoic acid, adipic acid; diphenylacetic acid; sodium succinate or sodium benzoate; acetals of aromatic aldehydes and polyfunctional alcohols such as sorbitol, for example, such as 1,3-2,4-di(benzylidene)-D-sorbitol, 1,3-2,4-di(4-tolylidene)-D-sorbitol, 1,3-2,4-di(4-ethylbenzylidene)-D-sorbitol, polymeric compounds, such as ionic copolymers (ionomers), for example.
13. Fillers and reinforcing agents, examples being calcium carbonate, silicates, glass fibers, asbestos, talc, kaolin, mica, barium sulfate, metal oxides and metal hydroxides, carbon black, graphite, wood flour and other flours or fibers of other natural products, synthetic fibers.
14. Other additives, examples being plasticizers, lubricants, emulsifiers, pigments, rheological additives, catalysts, leveling assistants, optical brighteners, flameproofing agents, antistatics, blowing agents.
15. Benzofuranones and indolines, as described for example in US-4325863, US-4338244, US-5175312; US-5216052; US-5252643, DE-A-4316611, DE-A-4316622, DE-A-4316876, EP-A-0589839 or EP-A-0591102, or 3-[4-(2-acetoxyethoxy)phenyl]-5,7-di-tert-butylbenzofuran-2-one, 5,7-di-tert-butyl-3-[4-(2-stearoyloxyethoxy)phenyl]-benzofuranon-2-one, 3,3'-bis[5,7-di-tert-butyl-3-(4-[2-hydroxyethoxy]phenyl)-benzofuran-2-one, 5,7-di-tert-butyl-3-(4-ethoxyphenyl)-benzofuran-2-one, 3-(4-acetoxy-3,5-dimethylphenyl)-5,7-di-tert-butylbenzofuran-2-one, 3-(3,5-diethyl-4-pivaloyloxyphenyl)-5,7-di-tert-butylbenzofuran-2-one.

The following examples shall demonstrate the instant invention:

### PREPARATION AND TESTING OF BLOWN PE-LD-FILMS

Blown films of PE-LD [type Lacqtene FB 3010, mfi: 0.3 (190 °C/2.16 kg); producer: Elf Atochem; base stabilization 0.005 % compound (J)]. The individual additional stabilizer formulations have been incorporated into the substrate using a mixer. Auxiliary additives have been dissolved in acetone for even distribution in the polymer and the solvent has been evaporated subsequently in the vacuum at 50 °C/30 min..

Afterwards, the different mixtures have been pre-extruded using a single screw extruder at 60 rpm with a die of 3 mm diameter at a melt (bulk) temperature T=180 °C.

Films of the thickness 100 µm were than prepared using a blow molding unit, type Collin with a temperature profile in the range of T= 160-180 °C at a screw speed of 35 rpm. The blow head was heated up to T=195 °C. The final film was drawn at an extracting speed of 1m/min. Pieces of the size 35 x 65 mm were cut for WOM-exposure and/or later treatment with a solution of the insecticide Permethrine P 25/75.

For acid exposure tests pieces of the size 40 x 40 mm have been cut out.

The samples for insecticide treatment were placed on metal supports as used for weathering tests and exposed to UV-light according to CAM-7 conditions (DIN 53 387/A) in a weatherometer type Atlas WOM 65. Every two weeks the samples have been placed for 24 hours in a methanolic solution containing 0.15 wg-% of the insecticide Permethrine P25/75, washed with demineralized water and dried at room temperature prior to re-continued WOM-exposure.

Samples used for alternating UV-exposure and acid treatment fixed in frames were exposed to UV-light according to CAM-7 conditions as described above. Every week the samples have been dipped during 24 hours in an aqueous sulfurous acid (concentration 0.1 mol/l), washed with demineralized water and dried at room temperature.

The time to brittleness was determined by 180° mechanical bending of the film. The results are presented in tables 1-3.

The following commercially available products were used:

### COMPOUND (A)

methanone, [2-hydroxy-4-(octyloxy)phenyl]phenyl

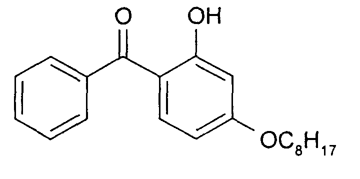

### COMPOUND (B)

poly-{[6[1,1,3,3-tetramethylbutyl)-imino]-1,3,5-triazine-2,4-diyl][2-(2,2,6,6-tetramethylpiperidyl)-amino]-hexamethylene-[4-(2,2,6,6-tetramethylpiperidyl)-imino]};

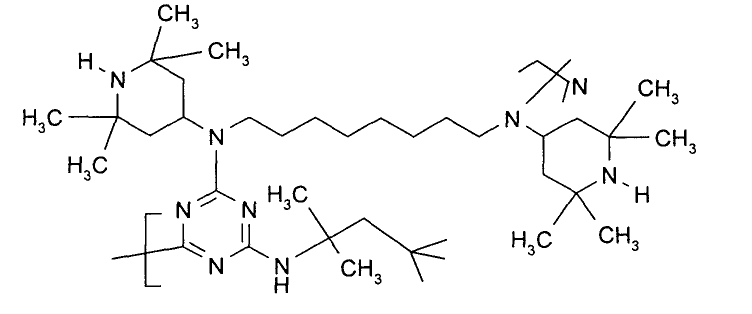

### COMPOUND (C)

1,3,5-Triazine-2,4,6-triamine-N,N"'-[1,2-ethanediylbis[[[4.6.-bis[butyl-(1,2,2,6,6-pentamethyl-4-piperidinyl)-amino]-1,3,5-triazine-2-yl]imino]-3,1-propanediyl]]-bis-[N',N"-dibutyl-N',N"-bis(1,2,2,6,6-tetramethyl-4-piperidinyl)-

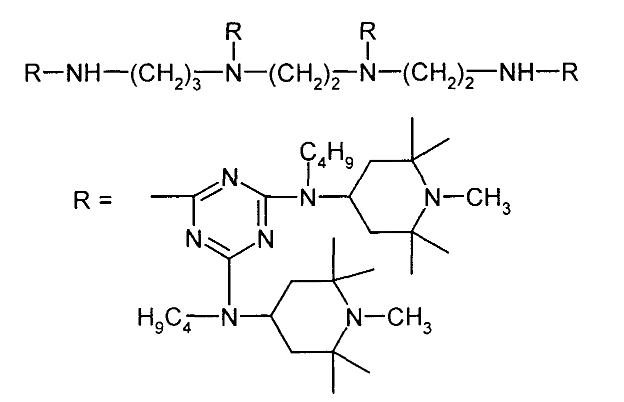

### COMPOUND (D)

poly-(N-hydroxyethyl-2,2,6,6-tetramethyl-4-hydroxy-piperidyl-succinate)

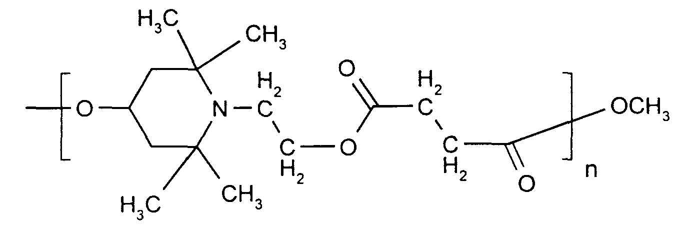

### COMPOUND (E)

1,3,5-Triazine-2,4,6-triamine-N,N'''-[1,2-ethanediylbis[[[4.6.-bis[butyl-(1,2,2,6,6-pentamethyl-4-piperidinyl)-amino]-1,3,5-triazine-2-yl]imino]-3,1-propanediyl]]-bis-[N',N"-dibutyl-N',N"-bis(1,2,2,6,6-tetramethyl-4-piperidinyl)-

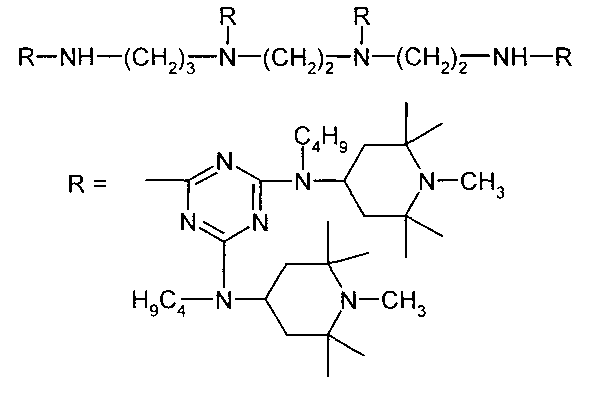

### COMPOUND (F)

mixture of 7-Oxa-3,20-diaza-dispiro[5.1.11.2]-heneicosane-20-propanoic-acid, 2,2,4,4-tetramethyl-21-oxo-dodecylester and 7-Oxa-3,20-diaza-dispiro[5.1.11.2]-heneicosane-20-propanoic-acid, 2,2,4,4-tetramethyl-21-oxo-tetradecylester

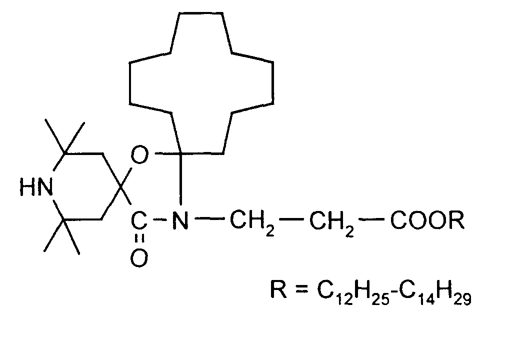

### COMPOUND (G)

2,2,4,4-Tetramethyl-7-oxa-3,20-diazadispiro[5.1.11.2]-heneicosan-21-one;

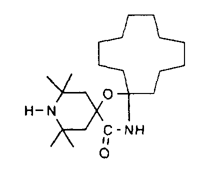

### COMPOUND (H)

1.6-hexamethylenediamine-N,N'-[bis-(2,2,6,6-tetramethyl-piperidinyl)]-N,N'-bisdialdehyd

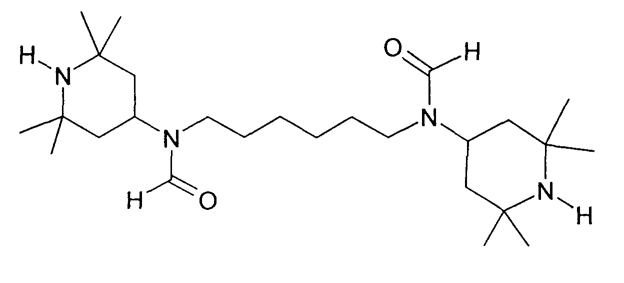

### COMPOUND (J)

tetrakismethylene(3,5-di-tert. butyl-4-hydroxyphenyl)-hydrocinnamate

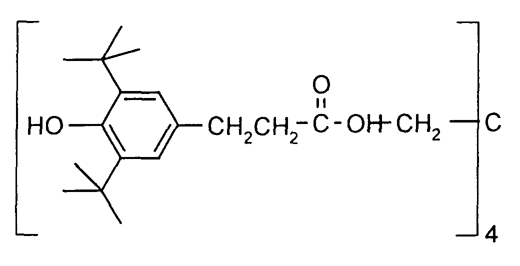

### COMPOUND (K)

octadecyl-3-(3,5-di-tert.butyl-4-hydroxyphenyl)-propionate

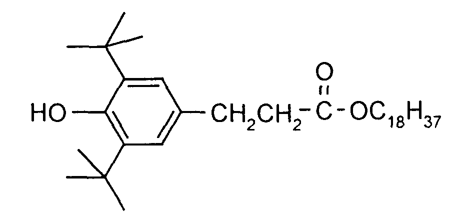

### COMPOUND (L)

tetrakis(2,4-di-tert.-butylphenyl)-44'-biphenylendiphosphit

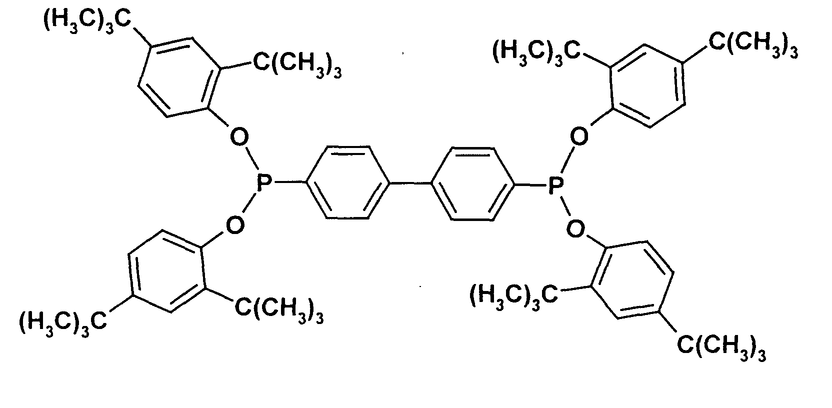

**TABLE 1**

| Stabilization of PE-LD blown films under accelerated weathering conditions (CAM -7, DIN 53 387/A); base stabilization: 0.03 wg-% compound (K) | |
|---|---|
| **Stabilizer-formulation** | **time to brittleness / weeks** |
| 0.3% compound (A) | 5 |
| 0.3% compound (A)+ 0.2% compound (B) | 20 |
| 0.3% compound (A)+ 0.2% compound (C) | 24 |
| 0.3% compound (A) + 0.2% component a) | 34 |

**TABLE 2**

| Stabilization of PE-LD blown films under alternating accelerated weathering conditions (CAM -7, DIN 53 387/A) and insecticide treatment (Permethrine P25/75) ; base stabilization: 0.03 wg-% compound (K) | |
|---|---|
| **Stabilizer-formulation** | **time to brittleness / weeks** |
| 0.3% compound (A) | 6 |
| 0.3% compound (A)+ 0.2% compound (B) | 13 |
| 0.3% compound (A)+ 0.2% compound (C) | 12 |
| 0.3% compound (A)+ 0.2% component a) | > 20 |

**TABLE 3**

| Stabilization of PE-LD blown films under alternating accelerated weathering conditions (CAM -7, DIN 53 387/A) and acid treatment (0.1 mol/l sulfurous acid) ; base stabilization: 0.03 wg-% compound (K) | |
|---|---|
| **Stabilizer-formulation** | **time to brittleness /weeks** |
| 0.3% compound (A) | 4 |
| 0.3% compound (A)+ 0.2% compound (B) | 17 |
| 0.3% compound (A)+ 0.2% compound (C) | 24 |
| 0.3% compound (A)+ 0.2% component a) | 31 |

### STABILIZATION OF BLOWN PE-HD-FILMS AGAINST LIGHT EXPOSURE

Blown films (thickness 50 µm) by mixing powdered PE-HD (type TVK FB 472; producer TVK, Hungary; mfi (unstabilized) 0.8 g/10 min. (190°C/2.16 kg); initial cristallinity 58%) with the required additives in a laboratory mixer, type Kenwood. Pre-extrusion with the individual formulations took place twice at 200°C using a single screw extruder type Collin with a screw composition 1:3, die diameter 3mm, screw speed 80 rpm before film blowing was carried out at 220°C using an extruder, type Collin with a film blowing unit. The received films have been transferred within diapositive-frames consisting of a plastic material in a wheather-o-meter type 65 WRC (producer Atlas) equipped with a Xenon lamp (6.5 kWatt) allowing an irradiation energy of 0.33 W/m² and with inner and outer filters based on borosilicate S. For artificial exposure the program CAM-7 (according ISO 11341) was chosen frequently applying 2 different wheathering phases: in a first phase (duration 102 minutes) under "dry" conditions (50% rel. humidity) a black panel temperature of 63 °C was adjusted whereas in a second period (duration 18 minutes) a black panel temperature of 50°C was set keeping the samples under 90% rel. humidity. The end of the experiment was reached for each individual sample as soon as brittleness was observed. The results for the series of non pre-treated samples are given in table 4. Prior to exposure in the weather-o-meter another series of samples have been dipped for 24 hours at room temperature in a 0.1 molar aqueous sulfurous acid solution before the artificial weathering program as described above took place. The data of this series are presented in table 5.

**TABLE 4**

| Stability of blown PE-HD films (thickness 50 µm) after accelerated weathering according to ISO 11341 (CAM-7); basic formulation (% = wg-%): 0.06% compound (J), 0.09% compound (L), 0.03% dilaurylthiodipropionate (DLTDP), 0.20% Ca-stearate | |
|---|---|
| **0.1% hindered amine stabilizer (HAS)** | **time to brittleness / weeks** |
| none | 6 |
| compound (B) | 45 |
| compound (E) | 48 |
| compound (D) | 13 |
| Polymer-bound stabilizer PB 49 | 54 |
| compound (F) | 13 |
| compound (III) | 18 |
| compound (G) | 20 |
| compound (H) | 10 |
| component a) | 83 |
| component a)/ compound (III) (1:1) | 83 |

**TABLE 5**

| Stability of blown PE-HD films (thickness 50*µ*m) after initial pretreatment during 24 hours in 0.1M sulfurous acid followed by accelerated weathering according to ISO 11341 (CAM-7); basic formulation (% = wg-%): 0.06% compound (J), 0.09% compound (L), 0.03% dilaurylthiodipropionate (DLTDP), 0.20% Ca-stearate | |
|---|---|
| **0.1% hindered amine stabilizer (HAS)** | **time to brittleness / weeks** |
| none | 6 |
| compound (B) | 14 |
| compound (E) | 14 |
| compound (D) | 13 |
| Polymer-bound stabilizer PB 49 | 14 |
| compound (F) | 12 |
| compound (III) | 13 |
| compound (G) | 13 |
| compound (H) | 10 |
| component a) | 89 |
| component a)/ compound (III) (1:1) | 83 |

The experimental data clearly show the surprisingly superior stabilizing properties of the instant composition compared to the prior art.

## Claims

1. Synergistic stabilizer composition for thermoplastic polymers comprising
a) a random copolymer of ethylene (I) and hindered amine moieties containing acrylates/ methacrylates (II) 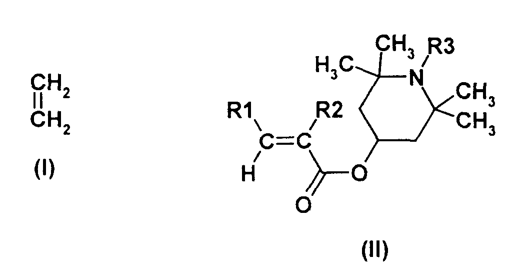 and
b) at least one light stabilizing compound based on sterically hindered amines (HAS) and/or UV absorbers,
wherein
R1 and R2 are each an independent hydrogen atom or a methyl group,
R3 is a hydrogen atom, a C₁-C₄-alkyl or a C₁-C₈-alkoxy group,
the ratio of component (II) to the sum of components (I) and (II) is less than 2 mol-%, and
the weight ratio of component a) to component b) is from 100:1 to 3:1.

2. A stabilizer composition as claimed in claim 1, wherein R1, R2 and R3 are hydrogen.

3. A stabilizer composition as claimed in claim 1 or 2, wherein the light stabilizing compound b) is propanedioic acid,[(4-methoxyphenyl)-methylene]-,bis(1,2,2,6,6-pentamethyl-4-piperidinyl)ester (III).

4. A stabilizer composition as claimed in any of claims 1 to 3, wherein the weight ratio of component a) to component b) is from 20:1 to 5:1.

5. A method of use of a stabilizer composition as claimed in any of claims 1 to 4 wherein an amount of 0.5 to 20 % by weight, based on the polymer, is incorporated into a thermoplastic polymer.

6. A method of use of a stabilizer composition as claimed in any of claims 1 to 4 wherein an amount of 1.0 to 10 % by weight, based on the polymer, is incorporated into a thermoplastic polymer.

7. A method of use as claimed in claim 5 or 6 wherein the thermoplastic polymer is a polyolefin.

8. A method of use as claimed in any of claims 5 to 7 wherein the thermoplastic polymer is an agricultural film made of polyolefins and which has been pretreated or is in contact with pesticides.

9. A process of stabilizing thermoplastic polymers comprising incorporating therein before or during processing a stabilizing quantity of the stabilizer composition according to claims 1 to 4.

10. A process according to claim 9 wherein the stabilizer composition is added in an amount of 0.5 to 20 % by weight, based on the thermoplastic polymer.

11. A process of stabilizing agricultural films made of polyolefins and pretreated or in contact with pesticides by incorporating a stabilizer composition as claimed in any of claims 1 to 4.
